# FASCICULE DE BREVET EUROPEEN

(11) **EP 0 677 934 B1**
(45) Date de publication et mention de la délivrance du brevet: **25.07.2001**
(21) Numéro de dépôt: 95410028.5
(22) Date de dépôt: 11.04.1995
(51) Int. Cl.: H04J 3/06

(54) **Procédé de détection d'un motif dans une transmission série**
Verfahren zur Mustererkennung in einer seriellen Übertragung
Method for pattern recognition in serial transmission

(30) Priorité: 12.04.1994 FR 9404669
(43) Date de publication de la demande: 18.10.1995
(73) Titulaire: STMicroelectronics S.A., 94250 Gentilly (FR)
(72) Inventeur: Chaisemartin, Philippe, F-38190 Sainte Agnes (FR)
(74) Mandataire: de Beaumont, Michel

(56) Documents cités:
- DE-A- 3 226 844
- DE-A- 3 623 910
- PATENT ABSTRACTS OF JAPAN vol. 5, no. 66 (E-55) (738) 2 Mai 1981 & JP-A-56 017 540 (NIPPON DENKI)

## Description

La présente invention concerne la détection de motifs prédéterminés dans une transmission série de données numériques.

Dans le domaine de la transmission de données numériques, des données peuvent être transmises en série, un bit à la fois, sur une ligne de transmission. Souvent, les données série sont transmises par trames qui sont délimitées par des codes utilisés pour identifier le début et la fin de chaque trame. De tels codes doivent être identifiés dans le flot de données avant que la signification des données dans les trames puisse être déterminée.

Plus particulièrement, une norme H261 dans le domaine de la transmission de données d'image comprimées sur des réseaux téléphoniques spécifie que de telles données doivent être transmises par trames de 512 bits. Le premier bit de chaque trame est un bit de synchronisation et les bits de synchronisation de 24 trames consécutives constituent un mot de synchronisation prédéterminé ou sa permutation cyclique. Ce mot de synchronisation de 24 bits est en fait un mot de 8 bits répété trois fois. Une succession de huit trames consécutives est appelée ci-après une multitrame.

La demande de brevet allemand 36 23 910 décrit un procédé consistant à stocker chaque bit reçu dans une mémoire comprenant des groupes de mots, chaque groupe de mots ayant au moins L bits, de manière que chaque groupe de mots contienne des bits d'une même position de trames consécutives. Chaque groupe de mots est décalé circulairement et comparé, à chaque décalage, au mot de synchronisation. Le procédé est mis en oeuvre par un microprocesseur pour effectuer une écriture bit par bit dans la mémoire, ce qui est particulièrement complexe.

Un objet de la présente invention est de détecter de manière simple un mot de synchronisation dans une succession de données série transmises par trames, le mot de synchronisation comprenant plusieurs bits transmis un bit par trame.

La présente invention atteint cet objet en prévoyant, pour chaque bit reçu, les étapes consistant à charger dans un registre à décalage le groupe de mots dans lequel le bit reçu doit remplacer un bit prédéterminé ; à décaler circulairement le contenu du registre à décalage ; quand le bit prédéterminé atteint l'entrée du registre à décalage, à fournir à l'entrée du registre à décalage le bit reçu au lieu du bit prédéterminé ; à permuter circulairement le contenu du registre à décalage jusqu'à ce qu'il atteigne son état initial ; à comparer le contenu du registre à décalage au mot de synchronisation à chaque décalage ; et à remplacer dans la mémoire ledit groupe de mots par le contenu du registre à décalage.

Pour simplifier les accès à une mémoire dynamique, selon un mode de réalisation de la présente invention, le groupe de mots comprend des mots d'adresses consécutives. La mémoire comprend généralement des pages comportant chacune un nombre prédéterminé de bits qui n'est pas un multiple de la longueur L du mot de synchronisation. Les groupes de mots comprennent chacun L+j bits, où L bits sont utilisés et j bits ne sont pas utilisés, j étant sélectionné de manière que le nombre prédéterminé de bits soit un multiple de L+j.

Ces objets, caractéristiques et avantages ainsi que d'autres de la présente invention seront exposés en détail dans la description suivante de modes de réalisation particuliers faite à titre non-limitatif à l'aide des figures jointes parmi lesquelles :
la figure 1 illustre le procédé selon l'invention pour trouver un mot de synchronisation dans un flot de données transmises en série ;
les figures 2A à 2E représentent des étapes du procédé de l'invention mises en oeuvre par un registre à décalage, tandis qu'un bit reçu est écrit dans la mémoire ;
la figure 3 représente une organisation de mémoire dynamique utilisée selon l'invention ;
la figure 4 représente une séquence de mémorisation de données dans une mémoire dynamique selon l'invention ;
la figure 5 représente schématiquement un mode de réalisation de circuit de détection selon l'invention ; et
la figure 6 représente un schéma plus détaillé du circuit de la figure 5.

En utilisant la norme H261 comme exemple, au moins huit trames complètes de bits reçus, une multitrame complète, doivent être scrutées pour trouver un mot de synchronisation qui est constitué par chaque premier bit des trames d'une multitrame. Il existe une probabilité relativement élevée qu'une multitrame de huit trames de bits aléatoires contienne une séquence de bits identique à celle du mot de synchronisation, à une position dans les trames autre que celle des bits du mot de synchronisation. Pour réduire cette probabilité, trois multitrames consécutives (24 trames) sont scrutées pour trouver un mot de synchronisation étendu de 24 bits qui est le mot de synchronisation initial de huit bits répété trois fois. Si, par exemple, le mot de synchronisation initial était 00011011, le mot de synchronisation étendu serait 000110110001101100011011.

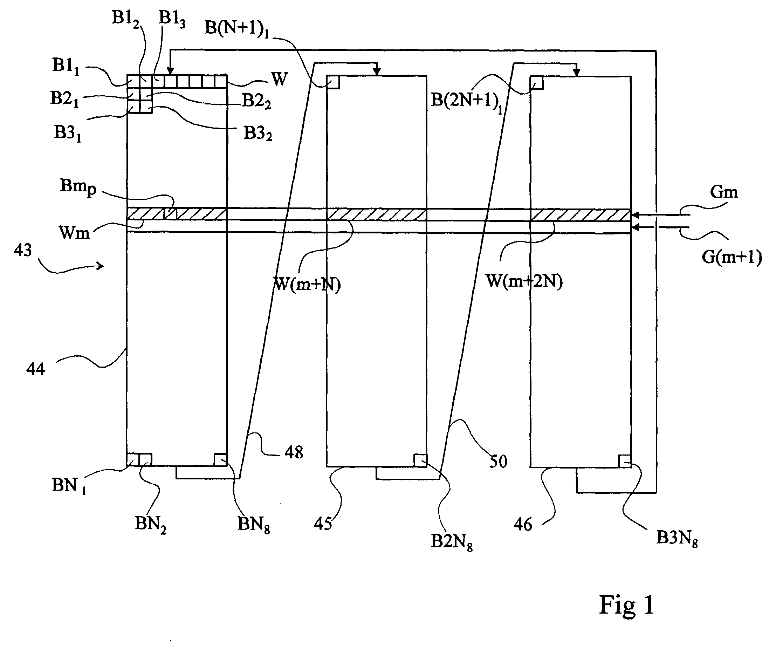

La figure 1 représente une disposition de zone mémoire 43 utilisée pour décrire de manière simple le procédé selon l'invention. La zone mémoire 43 comprend plusieurs blocs mémoire 44, 45, 46 dont chacun contient un nombre de mots égal à la longueur en bits N d'une trame. De préférence, les blocs contiennent des mots W de longueur égale au nombre de trames d'une multitrame, des mots de huit bits dans cet exemple. Les blocs 44, 45, 46 peuvent être consécutifs dans la mémoire, comme cela est représenté par des flèches 48, 50.

Le premier bit des données reçues, qui n'est pas nécessairement le premier bit d'une trame, est écrit dans le premier bit B1₁ du premier mot de la zone mémoire 43. Le deuxième bit reçu est écrit dans le premier bit B2₁ du deuxième mot, le troisième bit dans le premier bit B3₁ du troisième mot, et ainsi de suite jusqu'à ce que, après l'arrivée d'une longueur de trame de bits, le premier bit BN₁ du dernier, Nième, mot du bloc 44 est rempli.

Le bit reçu suivant est écrit dans le deuxième bit B1₂ du premier mot. Les deux bits reçus après sont écrits dans des bits B2₂, B3₂, qui sont respectivement les deuxièmes bits des deuxième et troisième mots de la zone mémoire 43... Le 2Nième bit reçu est écrit dans le deuxième bit BN₂ du dernier mot du bloc 44. Le (2N+1)ième bit est alors écrit dans le troisième bit B1₃ du premier mot du bloc 44 de la zone mémoire 43. De la même manière, les quatrième à huitième bits de tous les mots du bloc 44 sont remplis jusqu'à ce que le 8Nième bit reçu soit écrit dans le dernier bit BN₈ du dernier mot du bloc 44.

Le bit reçu suivant, le (8N+1)ième, est écrit dans le premier bit B(N+1)₁ du premier mot du deuxième bloc 45 de la zone mémoire 43. Le deuxième bloc se remplit alors bit par bit selon une séquence identique à celle du premier bloc, jusqu'à ce que le 16Nième bit reçu soit écrit dans le dernier bit B(2N)₈ du dernier mot du deuxième bloc mémoire 45.

Le bit reçu suivant, le (16N+1)ième, est alors écrit dans le premier bit B(2N+1)₁ du troisième bloc mémoire 46. Ce bloc se remplit de manière identique à celle des premier et deuxième blocs, jusqu'à ce que le 24Nième bit reçu soit écrit dans le dernier bit B3N₈ du dernier mot de la zone mémoire 43.

Le bit suivant, le (24N+1)ième, est écrit dans le bit B1₁, en écrasant le premier bit reçu.

De cette manière, chaque mot de 8 bits W de la zone mémoire contient des bits d'une même position de chacune de huit trames consécutives. Le mot qui contient le premier bit de chaque trame, les bits de synchronisation, contient par conséquent le mot de synchronisation de huit bits ou sa permutation cyclique. Ainsi, la synchronisation pourrait être obtenue en comparant chaque mot de la mémoire au mot de synchronisation de huit bits ou à ses permutations cycliques.

De manière similaire, chaque groupe de mots Gm (où m est un entier de 1 à N) constitué de mots Wm, W(m+N), W(m+2N), contient des bits d'une même position de chacune de 24 trames consécutives. L'un des groupes de mots contient le mot de synchronisation étendu de 24 bits, ou sa permutation cyclique. Le mot de synchronisation est fiablement détecté en comparant chaque groupe de mots de la mémoire au mot de synchronisation étendu et à ses permutations cycliques.

Pour détecter le mot de synchronisation, chaque groupe de mots Gm est chargé dans un registre à décalage rebouclé. Le contenu du registre à décalage est alors décalé circulairement un nombre de fois égal à la longueur totale en bits du groupe de mots, vingt quatre fois dans cet exemple. Pendant ces étapes de décalage, le contenu du registre à décalage est comparé au mot de synchronisation étendu.

Si le mot de synchronisation étendu est détecté à l'une quelconque des étapes de décalage, les bits contenus dans le groupe de mots Gm sont les premiers bits de trames respectives et la synchronisation est ainsi obtenue.

Si le mot de synchronisation n'a pas été détecté après toutes les étapes de décalage, les bits contenus dans le groupe de mots Gm ne sont pas les premiers bits de trames respectives. Le groupe de mots suivant G(m+1) est alors chargé dans le registre à décalage et décalé circulairement.

Ces étapes de décalage sont effectuées à chaque fois qu'un nouveau bit est écrit dans la mémoire. Les bits arrivent en série à une cadence beaucoup plus faible que la fréquence de fonctionnement d'un circuit typique pour traiter les données sérielles. La fréquence de réception est typiquement de l'ordre de 16 000 bits par seconde, tandis qu'un circuit de traitement peut travailler avec une fréquence d'horloge de plusieurs mégahertz. Ainsi, on dispose de suffisamment de temps entre les arrivées de deux bits successifs pour effectuer une rotation complète du registre à décalage.

En pratique, les circuits mémoire peuvent seulement être accédés mot par mot. Un aspect de la présente invention est de prévoir un procédé pour lire et écrire dans la mémoire bit par bit. Ce procédé peut avantageusement être combiné à la permutation et au test d'un groupe de mots comme cela a été décrit ci-dessus.

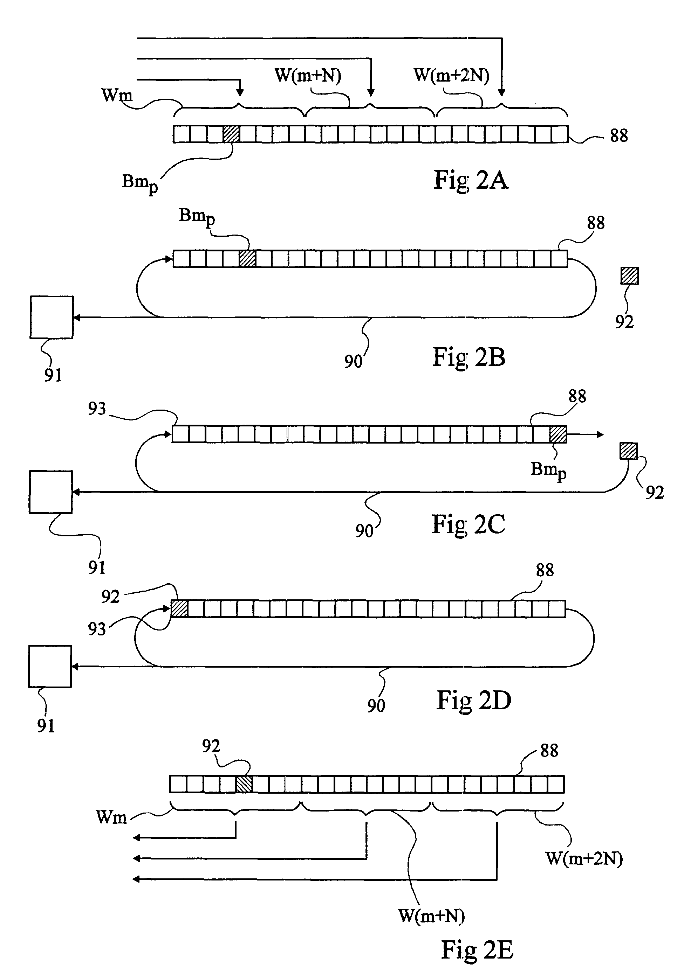

Les figures 2A à 2E, à observer en même temps que la figure 1, illustrent ce procédé. Un bit Bmₚ, (p = 1, 2... 8) du mot Wm est à remplacer par un bit reçu.

Dans la figure 2A, les mots Wm, W(m+N), W(m+2N) sont chargés dans un registre à décalage 88.

Dans la figure 2B, le registre à décalage est mis dans un mode de rotation et le mot de 24 bits contenu dans le registre 88 est décalé circulairement. A chaque décalage, le dernier bit du mot du registre à décalage est écrit dans le premier bit du mot du registre à décalage par une boucle 90 et est en même temps appliqué à un circuit 91 de reconnaissance de motif, par exemple une machine d'état fini. Un bit reçu 92 est stocké temporairement dans une bascule, en attente de remplacer le bit Bmₚ.

Dans la figure 2C, quand le bit Bmₚ arrive à la fin du registre à décalage 88, le mode du registre à décalage est commuté en un mode de décalage simple de manière que, au lieu d'être rebouclé, le bit Bmₚ est perdu et remplacé par le nouveau bit 92 appliqué à l'entrée du circuit de reconnaissance de motif et à l'entrée 93 du registre à décalage 88.

Dans la figure 2D, le registre à décalage est commuté de nouveau en mode de rotation, et décale circulairement son contenu jusqu'à ce que le nouveau bit 92 soit dans la position initialement occupée par le bit Bmₚ.

La figure 2E illustre ce résultat. Les données contenues dans le registre à décalage sont alors écrites dans la mémoire en tant que mots Wm, W(m+N) et W(m+2N). Ainsi, on a mis à jour le seul bit Bmp et effectué effectivement une écriture d'un seul bit dans la mémoire.

Le circuit de reconnaissance de motif 91 reçoit successivement les bits contenus dans le registre à décalage 88 aux étapes de décalage décrites. Le circuit de reconnaissance de motif 91 est par exemple une machine d'état fini prévue pour reconnaître le mot de synchronisation particulier recherché et validant un drapeau pour indiquer quand le mot de synchronisation est détecté.

Si le mot de synchronisation est détecté, les bits des mots Wm, W(m+N) et (W(m+2N) marquent le début de chaque trame respective. Par exemple, la trame commençant par le bit Bmₚ occupe chaque p-ième bit des mots Wm à WN et chaque (p+1)ième bit des mots W1 à W(m-1). La trame commençant par le huitième bit du mot Wm comprend chaque huitième bit des mots Wm à WN, et chaque premier bit des mots W(N+1) à W(N+m-1).

Comme la recherche du mot de synchronisation s'effectue à chaque arrivée d'un bit, la recherche est effectuée aussitôt que le premier bit arrive, même si aucun mot de synchronisation ne peut être détecté jusqu'à ce qu'au moins les mots W1, W(N+1) et W(2N+1) soient remplis.

Pour simplifier l'adressage, les mots Wm, W(m+N) et W(m+2N), correspondant à une certaine position de bit dans les trames, peuvent être stockés à des adresses consécutives. Ceci rend les opérations d'écriture et de lecture plus simples. Les mots Wm, W(m+N) et W(m+2N) sont alors stockés en tant que salves de trois mots consécutifs. Les trois adresses consécutives suivantes contiennent les mots W(m+1), W(m+N+1) et W(m+2N+1).

Pour des raisons de coût, il est préférable d'utiliser une mémoire dynamique (DRAM). Les mémoires dynamiques sont organisées en pages qui contiennent chacune 512 mots de huit bits. Lors du premier adressage d'un mot dans une certaine page, l'adresse complète de ce mot doit être fournie. Cette adresse consiste, par exemple, en une adresse de page de neuf bits et en une adresse de mot de neuf bits. Des adressages subséquents des mots dans la même page nécessitent seulement la fourniture d'adresses de mot de neuf bits. Ceci permet un adressage plus rapide des mots.

Pour cette raison, il est préférable de prévoir un stockage dans la mémoire tel que les mots Wm, W(m+N) et W(m+2N) de la figure 1 soient effectivement stockés à des adresses mémoire consécutives. Ceci permet de lire et écrire ces trois mots à l'aide d'une seule adresse de page et de trois adresses de mot.

Il existe un problème du fait que les mots à lire ou à écrire sont organisés en salves de trois. Les pages de la mémoire dynamique sont organisées en pages de 512 mots, qui n'est pas un multiple de trois. Si la dernière salve de la page contenait un ou deux mots dans la page suivante, on perdrait l'avantage d'utiliser un seul adressage de page. Pour cette raison, selon un mode de réalisation de l'invention, chaque salve de mots de la mémoire dynamique comprend quatre mots. Trois mots sont attribués aux données série reçues, comme cela a été décrit précédemment, et le quatrième mot n'est pas utilisé.

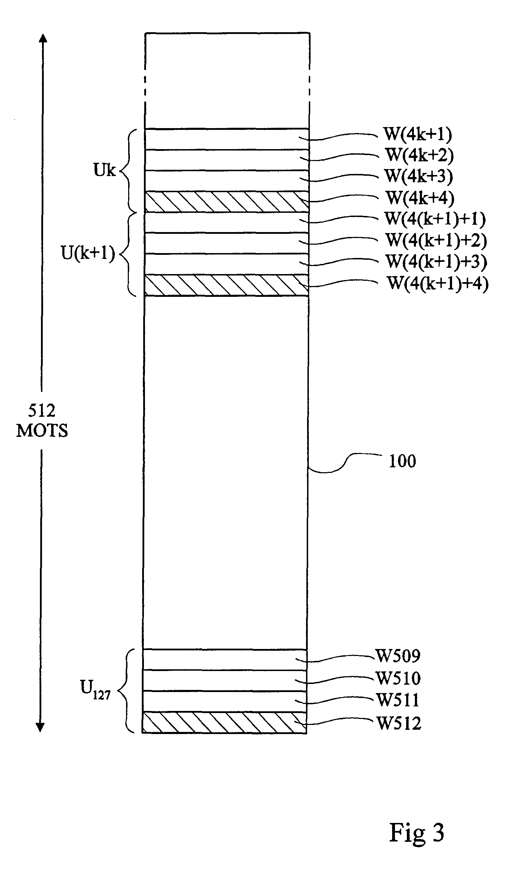

La figure 3 représente cette organisation. Une page 100 de la mémoire contient une pluralité de salves Uk de mots (k = 0, 1, 2,... 127), comprenant chacune trois mots consécutifs W(4k+1), W(4k+2) et W(4k+3), qui sont utilisés pour stocker les données ainsi qu'un mot W(4k+4) qui n'est pas utilisé. Ainsi, on assure que la fin d'une page coïncide avec la fin d'une salve de mots, puisque 512 est un multiple de quatre. Par conséquent, l'adressage de page réduit peut être utilisé.

Le besoin en mémoire est dans ce cas de quatre pages de 512 mots, c'est-à-dire de 2 kilooctets, alors que seulement 1,5 kilooctets sont effectivement nécessaires. Ceci n'est pas un inconvénient, car le circuit traitant les trames dispose habituellement d'une grande quantité de mémoire qu'il n'utilise pas avant que la synchronisation soit obtenue. Cette mémoire est donc disponible pour détecter les mots de synchronisation selon l'invention.

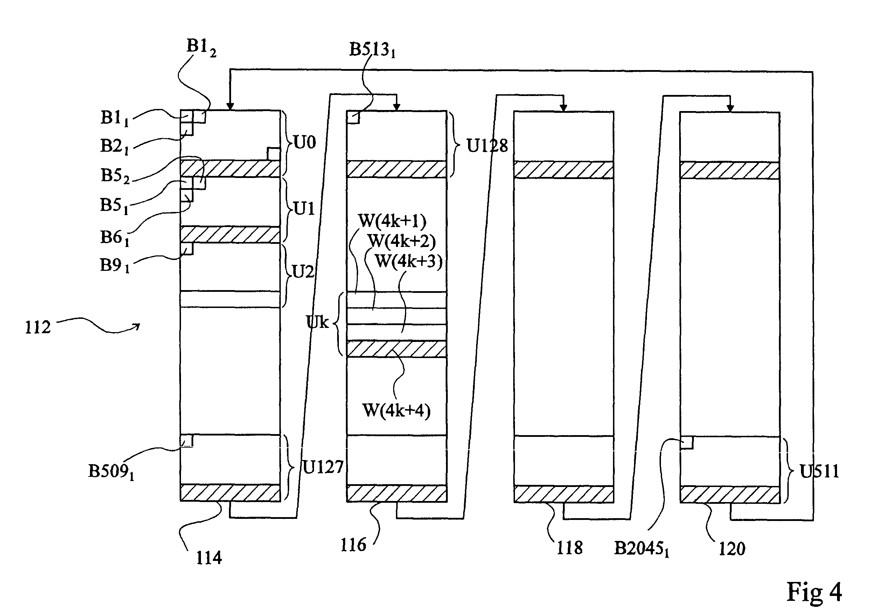

La figure 4 illustre le procédé pour stocker des données série entrantes dans une zone mémoire 112 organisée selon ce mode de réalisation de l'invention. La zone mémoire 112 est composée de quatre pages 114, 116, 118 et 120 contenant chacune 512 mots de huit bits. Les pages sont de préférence, mais pas nécessairement, à des adresses consécutives dans la mémoire. Chaque page de 512 mots contient 128 salves Uk de mots contenant chacune trois mots W(4k+1), W(4k+2) et W(4k+3) qui sont utilisés pour stocker des données ainsi qu'un mot W(4k+4) qui n'est pas utilisé. Chaque salve peut être considérée comme un mot de trente deux bits dont seulement les vingt quatre premiers sont utilisés.

Le premier bit reçu (qui n'est pas nécessairement le premier bit d'une trame) est stocké dans le premier bit B1₁ de la première salve U0 de la zone mémoire 112. Le deuxième bit est stocké dans le premier bit B5₁ de la salve suivante U1 ; le troisième bit étant stocké dans le premier bit B9₁ de la troisième salve U2, et ainsi de suite jusqu'à ce que le premier bit B509₁ de la dernière salve U127 de la première page 114 reçoive le 128ième bit. Le 129ième bit reçu est stocké dans le premier bit B513₁ de la première salve U128 de la deuxième page 116. On écrit dans la mémoire d'une manière similaire jusqu'à ce que le 512ième bit remplisse le premier bit B2045₁ de la dernière salve U511 de la zone mémoire 112.

Le bit suivant, le 513ième, est écrit dans le deuxième bit B1₂ de la première salve U0 de la zone mémoire 112 ; le 514ième bit étant écrit dans le deuxième bit B5₂ de la salve suivante U1... La mémoire se remplit de manière similaire jusqu'à ce que, après avoir stocké 4 096 bits, le premier mot de chaque salve soit rempli.

Le 4 097ième bit est stocké dans le premier bit B2₁ du deuxième mot de la première salve UO. Ce bit mémoire peut être considéré comme le neuvième bit de la salve.. Le 4 098ième bit est stocké dans le neuvième bit B6₁ de la deuxième salve U1... Les bits restants de chaque salve se remplissent de manière similaire jusqu'à ce que, après avoir reçu 12 288 bits, les premiers vingt quatre bits de chaque salve soient remplis.

Comme le quatrième mot (bits de rang 25 à 32) de chaque salve n'est pas utilisé, le bit reçu suivant, le 12 289ième, est écrit dans le bit B1₁, en écrasant le premier bit reçu. Les bits supplémentaires reçus écrasent les bits précédemment stockés dans le même ordre que ces bits précédemment stockés ont été écrits. Chaque salve contient 24 bits de même position de chacune de vingt quatre trames consécutives, ainsi qu'un mot non-utilisé de huit bits.

La recherche du mot de synchronisation et l'écriture bit par bit dans la mémoire sont effectuées de la même manière que décrite précédemment, sauf que des mots consécutifs en mémoire W(4k+1), W(4k+2), W(4k+3) sont chargés dans le registre à décalage 88 et reécrits dans la mémoire à partir du registre à décalage après avoir décalé et remplacé un bit par un bit correspondant nouvellement arrivé. Le quatrième mot de chaque salve n'est pas chargé dans le registre à décalage.

Selon une variante, quatre multitrames peuvent être traitées en utilisant les 32 bits de chaque salve à l'aide d'un registre à décalage de 32 bits pour rechercher un mot de synchronisation étendu de 32 bits.

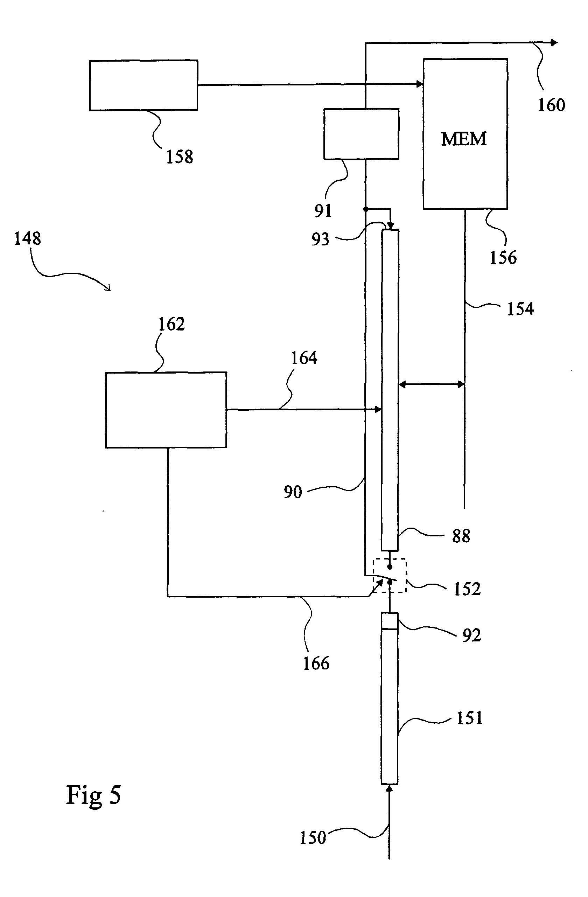

La figure 5 représente schématiquement un mode de réalisation de circuit 148 mettant en oeuvre le procédé selon l'invention. Les bits série reçus 150 sont stockés dans une mémoire tampon 151. La sortie de cette mémoire tampon est reliée à l'entrée d'un commutateur 152. Le commutateur 152 a une deuxième entrée recevant la sortie du registre à décalage 88 et a une sortie reliée à l'entrée 93 du registre à décalage. Le registre à décalage 88 communique avec la mémoire 156 par un bus de données 154. Un circuit d'adressage 158 fournit les adresses à la mémoire 156. Le circuit de reconnaissance de motif 91 est relié à l'entrée 93 du registre à décalage et a une sortie 160 reliée à des circuits externes. Un circuit de commande 162 a une première sortie 164 qui commande le registre à décalage 88 et une deuxième sortie 166 qui commande le commutateur 152. Un signal d'horloge est aussi fourni à la mémoire, au registre et au circuit de commande, mais n'est pas représenté pour des raisons de clarté.

Les bits reçus 150 sont stockés dans la mémoire tampon 151. De là, ils sont transférés, un bit 92 à la fois, dans le registre à décalage 88 et ensuite dans la mémoire 156, selon le procédé décrit précédemment. Ce transfert est géré par le circuit de commande 162 et par le circuit d'adressage de mémoire 158. Des groupes de mots Gm, Uk sont chargés dans le registre à décalage 88 et décalés circulairement, le circuit de détection de motif 91 cherchant le mot de synchronisation au fur et à mesure que la rotation progresse. Si le mot de synchronisation est reconnu, le circuit de reconnaissance de motif 91 valide un drapeau fournissant un signal de sortie 160 indiquant que les bits contenus dans le registre à décalage sont les bits de synchronisation de trames respectives. Des circuits externes, par exemple un système à microprocesseur, peut alors lire les bits requis des emplacements correspondants de la mémoire 156.

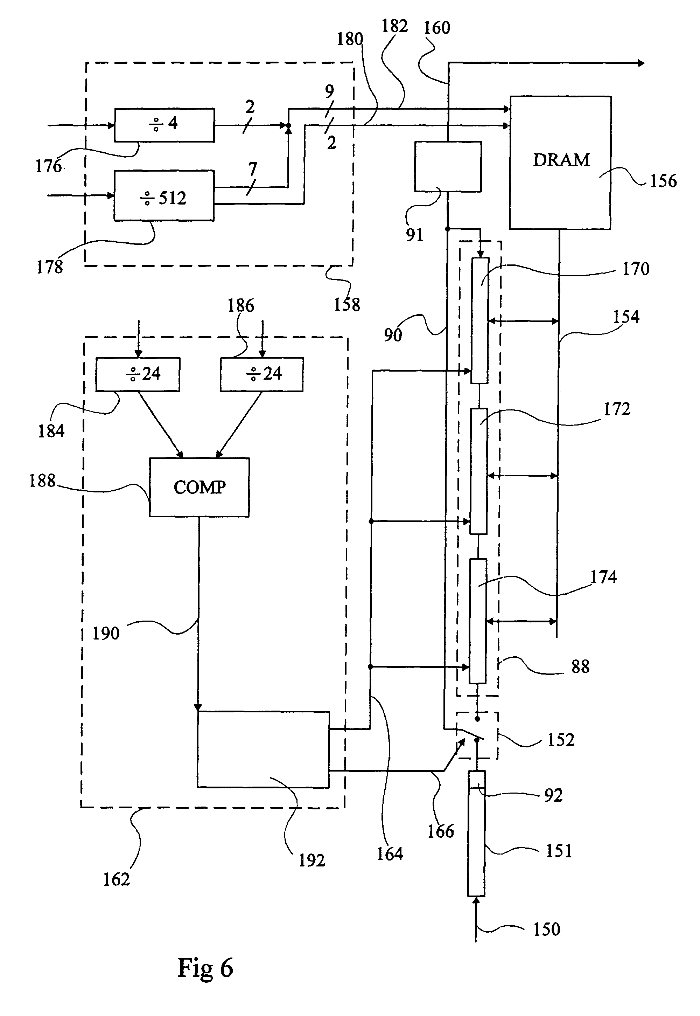

La figure 6 représente un schéma plus détaillé du circuit de la figure 5. La mémoire 156 est une mémoire dynamique. Le registre à décalage 88 est constitué d'une succession de trois registres à décalage de huit bits 170, 172, 174. Le rebouclage 90 du registre à décalage, le circuit de détection de motif 91 et sa sortie 160, la mémoire tampon 151, l'entrée de données 150, le bus mémoire 154, le commutateur 152 et son signal de commande 166 sont tels que décrits précédemment.

Le circuit d'adressage de mémoire 158 comprend deux compteurs 176, 178. Le compteur 178 est un compteur de 9 bits (diviseur par 512). Les deux bits de poids le plus fort de sa sortie fournissent les adresses de page 180 de la mémoire 156. Les sept bits de poids le plus faible de sa sortie fournissent les bits de poids 8 à 2 de l'adresse de mot 182, le compteur 176, qui est un compteur de deux bits (diviseur par 4), fournissant les bits de poids 1 et 0 de l'adresse de mot 182. Ces deux compteurs sont cadencés par des signaux d'horloge tels que le compteur 176 est incrémenté de quatre à chaque chargement d'une salve de mots Uk dans le registre à décalage 88, et est incrémenté de nouveau de quatre lorsque le contenu du registre à décalage 88 est réécrit dans la mémoire 156. Le compteur 178 est incrémenté de un après chaque écriture d'une salve Uk dans la mémoire 156. Ainsi, le compteur diviseur par quatre 176 compte la multitrame courante et détermine donc quel mot de la salve courante est sélectionné. Le compteur diviseur par 512 compte les bits courants et sélectionne la salve correspondante parmi les 512 salves disponibles réparties sur quatre pages de la mémoire.

Le circuit de commande 162 du registre à décalage comprend deux compteurs 184, 186 diviseurs par 24, dont les sorties sont reliées à un comparateur 188. Le comparateur 188 fournit un signal 190 à des circuits logiques 192 qui génèrent un signal de commande 164 des registres à décalage 170, 172 et 174 et un signal de commande 166 du commuteur 152.

Les deux compteurs 184, 186 sont cadencés par des signaux d'horloge tels que le premier compteur 184 est incrémenté une fois tous les 512 bits reçus et que le deuxième compteur 186 est incrémenté à chaque décalage du registre à décalage 88.

Le premier compteur 184 compte par conséquent les trames couramment reçues sur l'entrée 150. Le deuxième compteur 186 compte le nombre de décalages subis par les bits contenus dans le registre à décalage 88. Le comparateur 188 émet un signal 190 quand les deux compteurs contiennent des valeurs égales. A ce moment, un signal est fourni par le circuit logique 192 au commutateur 152, et le bit 92 de la mémoire tampon 151 est transmis sur l'entrée 93 du registre à décalage à la prochaine commande de décalage 164. Selon le sens du décalage effectué sur le contenu du registre à décalage, l'un des compteurs de 24 bits peut être un décompteur.

Alors que l'invention a été décrite à l'aide de modes de réalisation spécifiques, cette invention n'est pas limitée à ces modes de réalisation. En particulier, l'utilisation des pages de la mémoire peut être généralisée de manière que toute page qui contient un nombre de bits qui n'est pas un multiple de la longueur L du mot de synchronisation, mais qui est un multiple de (L + j) soit organisée en salves contenant chacune L bits utilisés et j bits non-utilisés. Des mots de synchronisation variables peuvent être détectés en stockant le mot de synchronisation recherché dans un registre et remplaçant la machine d'état fini du circuit de détection de motif 91 par un comparateur qui compare le contenu du registre à décalage 88 au mot de synchronisation stocké. Des mots de synchronisation de longueur autre que huit bits peuvent être détectés, dans des groupes autres que trois multitrames. La longueur des mots de la mémoire peut être autre que le nombre de trames d'une multitrame, pourvu que la longueur de mot total utilisée dans le registre à décalage 88 est égale à un multiple du nombre de mots d'une multitrame. Les bits du mot de synchronisation peuvent être à des positions autres que la première de chaque trame.

## Revendications

1. Procédé pour détecter un mot de synchronisation dans des trames de données transmises en série, le mot de synchronisation comprenant L bits de synchronisation transmis un bit par trame à une position prédéterminée dans chaque trame, comprenant l'étape consistant à stocker chaque bit reçu dans une mémoire comprenant des groupes de mots (Gm ; Uk), chaque groupe de mots ayant au moins L bits, de manière que chaque groupe de mots contienne des bits d'une même position de trames consécutives ; comprenant les étapes suivantes pour chaque bit reçu :
- charger dans un registre à décalage (88) le groupe de mots (Gm ; Uk) dans lequel le bit reçu (92) doit remplacer un bit prédéterminé (Bmₚ) ;
- décaler circulairement le contenu du registre à décalage ;
- quand le bit prédéterminé (Bmₚ) atteint l'entrée du registre à décalage, fournir à l'entrée du registre à décalage le bit reçu (92) au lieu du bit prédéterminé ;
- permuter circulairement le contenu du registre à décalage jusqu'à ce qu'il atteigne son état initial ;
- comparer (91) le contenu du registre à décalage (88) au mot de synchronisation à chaque décalage ; et
- remplacer dans la mémoire ledit groupe de mots (Gm ; Uk) par le contenu du registre à décalage,
dans lequel la mémoire (156) comprend des pages (100 ; 114, 116, 118, 120) comportant chacune un nombre prédéterminé de bits qui n'est pas un multiple de la longueur L du mot de synchronisation, caractérisé en ce que les groupes de mots (Uk) comprennent chacun L+j bits, où L bits sont utilisés et j bits ne sont pas utilisés, j étant sélectionné de manière que le nombre prédéterminé de bits soit un multiple de L+j.

2. Procédé selon la revendication 1, caractérisé en ce qu'il comprend les étapes suivantes :
a) écrire chaque bit reçu (92) dans un bit de même position de groupes de mots successifs ;
b) quand au moins une longueur de trame de bits de même position sont remplis, recommencer l'étape a) avec une position subséquente ; et
c) quand au moins une longueur de trame de groupes sont chacun remplis de L bits, recommencer l'étape a) avec une position initiale.

3. Procédé selon la revendication 2, caractérisé en ce que le groupe de mots (Uk) comprend des mots (W(4k+1), W(4k+2), W(4k+3)) d'adresses consécutives.

4. Procédé pour détecter un mot de synchronisation dans des trames de données transmises en série, le mot de synchronisation comprenant L bits de synchronisation transmis un bit par trame à une position prédéterminée dans chaque trame, utilisant une mémoire dynamique (156) contenant des mots organisés en pages (100 ; 114, 116, 118, 120) comportant chacune un nombre prédéterminé de bits qui n'est pas un multiple de la longueur L du mot de synchronisation, et comprenant les étapes suivantes :
- stocker chaque bit reçu dans la mémoire (156) par groupes de mots (Gm ; Uk), de manière que chaque groupe de mots contienne des bits d'une même position de trames consécutives ;
- décaler circulairement chaque groupe de mots ; et
- comparer le groupe de mots, à chaque décalage, au mot de synchronisation ;
caractérisé en ce que chaque groupe de mots (Uk) comprend des mots (W(4k+1), W(4k+2), W(4k+3)) d'adresses consécutives et en ce que les groupes de mots (Uk) comprennent chacun L+j bits, où L bits sont utilisés et j bits ne sont pas utilisés, j étant sélectionné de manière que le nombre de bits d'une page soit un multiple de L+j.

5. Procédé selon la revendication 4, caractérisé en ce qu'il comprend les étapes suivantes :
a) écrire chaque bit reçu (92) dans un bit de même position de groupes de mots successifs ;
b) quand au moins une longueur de trame de bits de même position sont remplis, recommencer l'étape a) avec une position subséquente ; et
c) quand au moins une longueur de trame de groupes sont chacun remplis de L bits, recommencer l'étape a) avec une position initiale.

## Patentansprüche

1. Verfahren zum Detektieren eines Synchronisationswortes in Rahmen serienmäßig übertragener Daten, wobei das Synchronisationswort L Synchronisationsbits umfaßt, und zwar übertragen ein Bit pro Rahmen an einer vorbestimmten Position jedes Rahmens, wobei der Schritt des Speicherns jedes empfangenen Bits in einem Speicher vorgesehen ist, der Gruppen von Worten (Gm; Uk) aufweist, wobei jede Gruppe von Worten mindestens L Bits besitzt, so daß jede Gruppe von Worten Bits von einer gleichen Position in aufeinanderfolgenden Rahmen enthält, wobei für jedes ankommende Bit die folgenden Schritte vorgesehen sind:
Laden der Gruppen von Worten (Gm; Uk) in denen das ankommende Bit (92) über ein vorbestimmtes Bit (Bmₚ) geschrieben werden soll, in ein Schieberegister (88);
Rotieren der Inhalte des Schieberegisters;
wenn das vorbestimmte Bit (Bmₚ) den Eingang des Schieberegisters erreicht, Verschieben des ankommenden Bits (92) anstelle des vorbestimmten Bits;
Rotieren der Inhalte des Schieberegisters bis sie ihren Anfangszustand erreichen;
Vergleichen (91) der Inhalte des Schieberegisters (88) bei jeder Rotation mit dem Synchronisationswort; und
Überschreiben der Gruppen von Worten (Gm; Uk) mit den Inhalten des Schieberegisters in dem Speicher,
wobei der Speicher (156) Seiten (100; 114; 116, 118, 120) aufweist, deren jede eine vorbestimmte Anzahl von Bit-Stellen oder Bit-Lokationen enthält, die kein Vielfaches der Synchronisationswortlänge L sind,
dadurch gekennzeichnet, daß die Gruppen von Worten (Uk) jeweils L+j Bits aufweisen, wobei die L Bits verwendet und die j Bits nicht verwendet werden, und wobei j derart ausgewählt ist, daß die vorbestimmte Zahl von Bitstellen ein Vielfaches von L+j ist.

2. Verfahren nach Anspruch 1, dadurch gekennzeichnet, daß es die folgenden Schritte aufweist:
a) Einschreiben jedes ankommenden Bits (92) in eine gleiche Bitstelle von aufeinanderfolgenden Gruppen von Worten;
b) wenn mindestens eine Rahmenlänge der gleichen Bitstellen gefüllt ist, Wiederaufnahme des Schrittes a) mit einer darauffolgenden Bitstelle; und
c) wenn mindestens eine Rahmenlänge von Gruppen jeweils mit L Bits gefüllt sind, Wiederaufnahme des Schrittes a) mit einer anfänglichen Bitstelle.

3. Verfahren nach Anspruch 2, dadurch gekennzeichnet, daß die Gruppe von Worten (Uk) Worte (W(4k+1), W(4k+2), W(4k+3)) an aufeinanderfolgenden Adressen aufweist.

4. Verfahren zum Detektieren eines Synchronisationswortes in Rahmen von serienmäßig übertragenen Daten, wobei das Synchronisationswort L Synchronisationsbits aufweist, und zwar übertragen ein Bit pro Rahmen an einer vorbestimmten Position in jedem Rahmen, und zwar unter Verwendung eines dynamischen Speichers (156), der in Seiten (100; 114, 116, 118, 120) organisierte Worte enthält, wobei jedes eine vorbestimmte Anzahl von Bitstellen enthält, die nicht ein Vielfaches der Synchronisationswortlänge L ist, und wobei die folgenden Schritte vorgesehen sind:
Speichern jedes ankommenden Bits (Uk) in dem Speicher (156) in Gruppen von Worten (Gm; Uk) derart, daß jede Gruppe von Worten Bits in einer gleichen Position in aufeinanderfolgenden Rahmen enthält;
Rotieren jeder Gruppe von Worten; und
Vergleichen der Gruppe von Worten bei jeder Rotation mit dem Synchronisationswort;
dadurch gekennzeichnet, daß jede Gruppe von Worten (Uk) Worte (W(4k+1), W(4k+2), W(4k+3)) an aufeinanderfolgenden Adressen aufweist und wobei die Gruppe von Worten (Uk) jeweils L+j Bits aufweist, wobei die L Bits verwendet und die j Bits nicht verwendet werden, wobei ferner j derart ausgewählt wird, daß die Anzahl der Bitstellen in einer Seite ein Vielfaches von L+j ist.

5. Verfahren nach Anspruch 4, dadurch gekennzeichnet, daß es die folgenden Schritte aufweist:
a) Einschreiben jedes ankommenden Bits (92) in eine gleiche Bitstelle von aufeinanderfolgenden Gruppen von Worten;
b) Wiederaufnahme des Schritts a) mit einer darauffolgenden Bitstelle, wenn mindestens eine Rahmenlänge der gleichen Bitstellen gefüllt ist; und
c) Wiederaufnahme des Schritts a) mit einer anfänglichen Bitstelle, wenn mindestens eine Rahmenlänge von Gruppen jeweils mit L Bits gefüllt ist.

## Claims

1. A method for detecting a synchronization word in frames of serially transmitted data, the synchronization word comprising L synchronization bits transmitted one bit per frame at a predetermined position in each frame, comprising the step of storing each received bit in a memory comprising groups of words (Gm; Uk), each group of words having at least L bits, so that each group of words contains bits from a same position in consecutive frames, comprising, for each incoming bit, the following steps:
- loading in a shift register (88) the group of words (Gm; Uk) in which the incoming bit (92) is to be written over a predetermined bit (Bmₚ);
- rotating the contents of the shift register;
- when the predetermined bit (Bmₚ) reaches the input of the shift register, shifting in the incoming bit (92) instead of the predetermined bit;
- rotating the contents of the shift register until they reach their initial state;
- comparing (91) the contents of the shift register (88) to the synchronization word at each rotation; and
- overwriting in the memory said group of words (Gm; Uk) with the contents of the shift register,
wherein the memory (156) comprises pages (100; 114, 116, 118, 120) each containing a predetermined number of bit locations, which is not a multiple of the synchronization word length L, characterized in that the groups of words (Uk) each comprise L+j bits, wherein L bits are used and j bits are unused, j being selected such that the predetermined number of bit locations is a multiple of L+j.

2. A method according to claim 1, characterized in that it comprises the following steps:
a) writing each incoming bit (92) in a same bit location of successive groups of words;
b) when at least one frame length of same bit locations are filled, resuming step a) with a subsequent bit location; and
c) when at least one frame length of groups are each filled with L bits, resuming step a) with an initial bit location.

3. A method according to claim 2, characterized in that the group of words (Uk) comprises words (W(4k+1), W(4k+2), W(4k+3)) at consecutive addresses.

4. A method for detecting a synchronization word in frames of serially transmitted data, the synchronization word comprising L synchronization bits transmitted one bit per frame at a predetermined position in each frame, using a dynamic memory (156), containing words organized in pages (100; 114, 116, 118, 120), each containing a predetermined number of bit locations, which is not a multiple of the synchronization word length L, comprising the steps of:
- storing each incoming bit in the memory (156) in groups of words (Gm; Uk), such that each group of words contains bits from a same position in consecutive frames;
- rotating each group of words; and
- comparing the group of words, at each rotation, to the synchronization word;
characterized in that each group of words (Uk) comprises words (W(4k+1), W(4k+2), W(4k+3)) at consecutive addresses, and the groups of words (Uk) each comprise L+j bits, wherein L bits are used and j bits are unused, j being selected such that the number of bit locations in a page is a multiple of L+j.

5. A method according to claim 4, characterized in that it comprises the following steps:
a) writing each incoming bit (92) in a same bit location of successive groups of words;
b) when at least one frame length of same bit locations are filled, resuming step a) with a subsequent bit location; and
c) when at least one frame length of groups are each filled with L bits, resuming step a) with an initial bit location.
